# EUROPEAN PATENT APPLICATION

(11) **EP 0 837 596 A1**
(43) Date of publication of application: **22.04.1998**
(21) Application number: 97402441.6
(22) Date of filing: 15.10.1997
(51) Int. Cl.: H04N 1/21, H04N 5/232

(54) **Electronic camera employing a wireless data communicating device**

(30) Priority: 17.10.1996 JP 275061/96
(71) Applicant: CASIO COMPUTER CO., LTD., Shinjuku-ku, Tokyo 163-02 (JP)
(72) Inventor: Arai, Tatsuo, Hamura-shi, Tokyo, 205 (JP); Haraguchi, Takatoshi, Hamura-shi, Tokyo, 205 (JP)
(74) Representative: Joly, Jean-Jacques

(57) **Abstract**

The electronic still camera is capable of storing image data in a memory (53) and includes a main body (2) and a movable body (3), the latter being rotatably supplied to the main body (2). The main body (2) has a liquid crystal display LCD (6), which displays a picture corresponding to the image data stored in the memory. The movable body (3) has a wireless data communicating device (23) for transmitting the image data stored in the memory to a peripheral apparatus. The wireless data communicating device may be faced to a wireless data communicating device of the peripheral apparatus by the rotation of the movable body (3).

## Description

The present invention relates to an electronic camera employing a wireless data communicating device for sending and/or receiving image data to and/or from a peripheral apparatus.

Recently, electronic cameras have been used in place of a conventional film containing camera, and as a devise for entering image data into a personal computer or the like. Such an electronic camera stores in a memory image data corresponding to the pictures which are taken. Further, some electronic camera models have a display device such as an LCD, which performs functions of a viewfinder and a monitor for watching a picture corresponding to the image data stored in the memory, and a wireless data communicating device, such as an infrared data communicating device, for sending and receiving the image data to and from a peripheral apparatus, such as a personal computer and a printer. In such models of the electronic cameras, a user searches image data to be transferred to the peripheral apparatus with the display device and faces the wireless data communicating device of the electronic camera to that of the peripheral apparatus for transferring the image data from the electronic camera to the peripheral apparatus. Further, in such models of the electronic cameras, the display device may display data indicating conditions of the data communicating operation for user's observation during the time when the wireless data communicating device is sending and receiving the image data to and form the peripheral apparatus.

In the meantime, the portions of the camera and the peripheral apparatus at which the wireless data communicating device is mounted depend on their types or models. Therefore, when the wireless data communicating devices of the electronic camera and the other apparatus are faced to each other, it is difficult for the user to see the display device because of the relation between their positions at which the wireless data communicating devices are mounted. In this case, the user can neither search the image data to be sent to the peripheral apparatus nor observe the conditions of the data communicating operation with the display device during the time when the wireless data communicating devices are facing to each other.

Therefore, it is an object of the invention to provide a electronic camera which permits the user to keep it within sight of the display device even when the wireless data communicating devices are faced to each other.

In order to achieve this objective, the present invention provides an electronic camera for storing image data, which comprises a main body, a display device contained in the main body for displaying a picture corresponding to the image data, a movable body movably coupled to the main body, and a wireless data communicating device contained in the movable body for communicating the image data.

Fig. 1 is a perspective view of an electronic still camera employing the present invention.

Fig. 2 is a rear view of the camera shown in Fig. 1.

Fig. 3 is a front view of the camera shown in Fig. 1.

Fig. 4A is a top view of the camera shown in Fig. 1.

Fig. 4B is a bottom view of the camera shown in Fig. 1.

Figs. 5A and 5B are side views of the camera shown in Fig. 1.

Figs. 6 is a rear view of the camera shown in Fig. 1, with its movable body is rotated at 90° forwards with respect to its main body.

Fig. 7 is a top view of the camera shown in Fig. 6.

Fig. 8 is a block diagram of the camera shown in Fig. 1.

Fig. 9 is a perspective view of a camera in a second embodiment of the present invention.

Fig. 10 is a top view of the camera shown in Fig. 9.

Fig. 11 is a bottom view of a camera in a third embodiment of the present invention.

Fig. 12 is a rear view of the camera shown in Fig. 11, with its movable body is rotated at 90° forwards with respect to its main body.

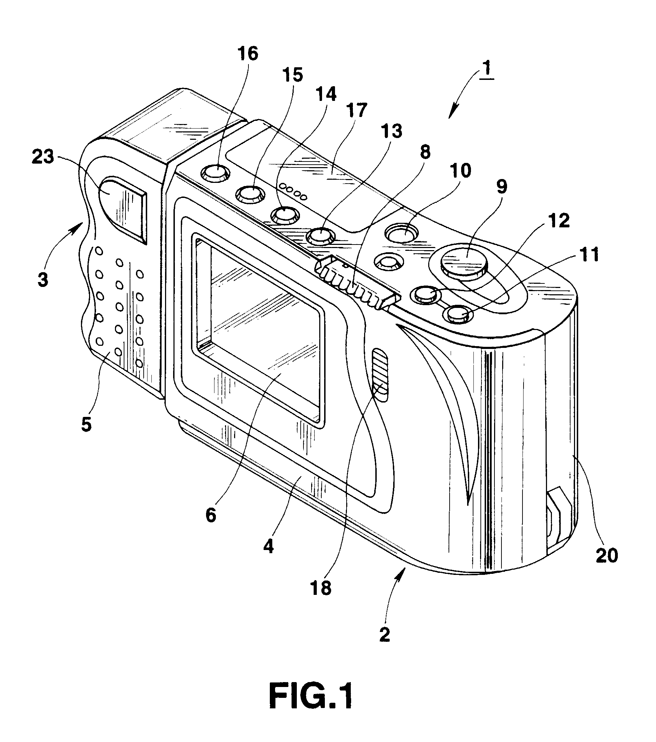

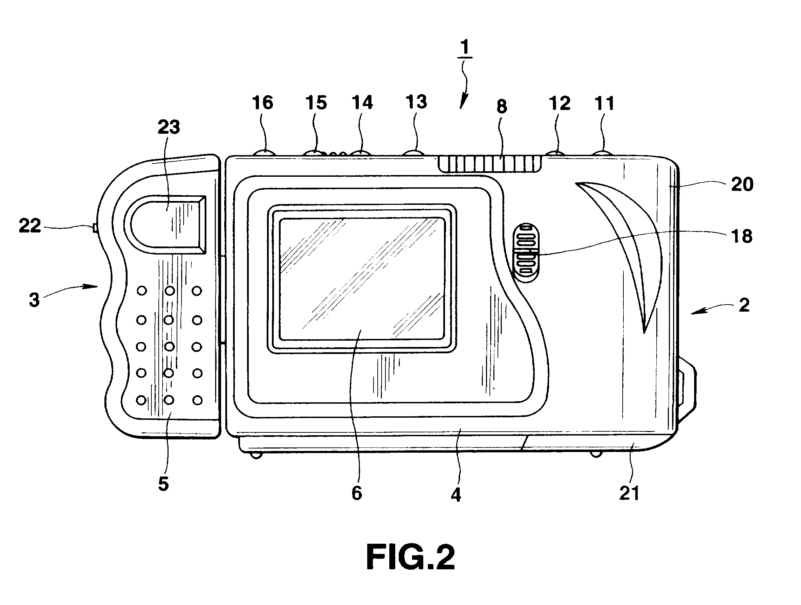

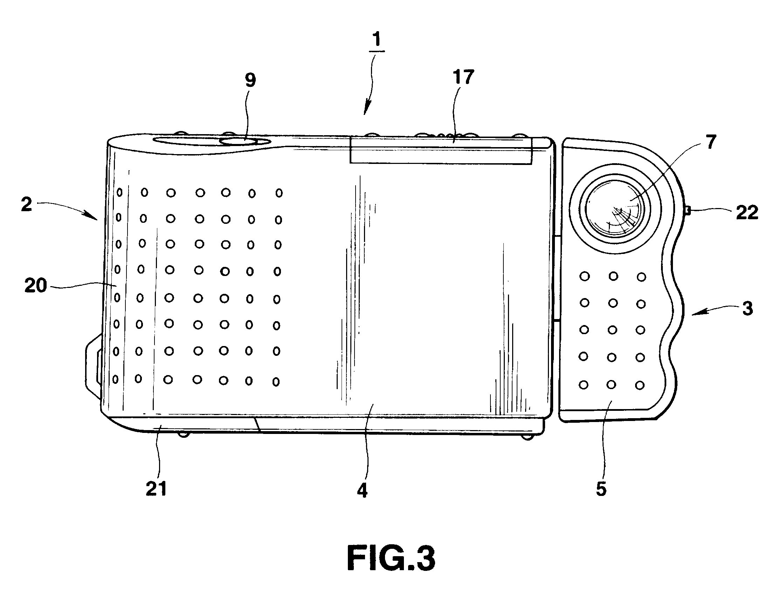

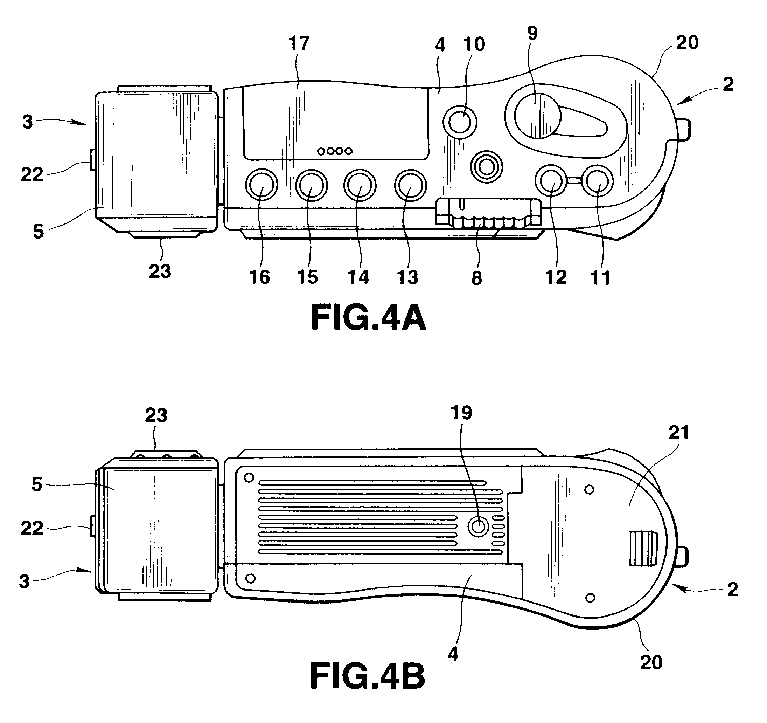

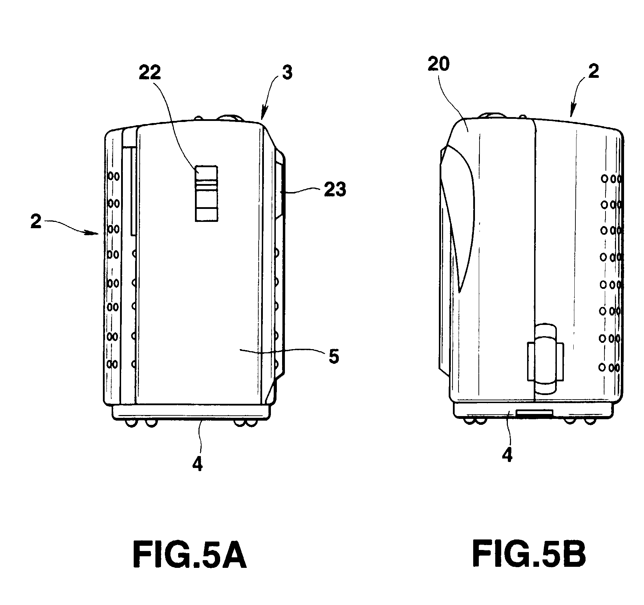

Preferred embodiments of the present invention will be described referring to Figs. 1-12 as follows.

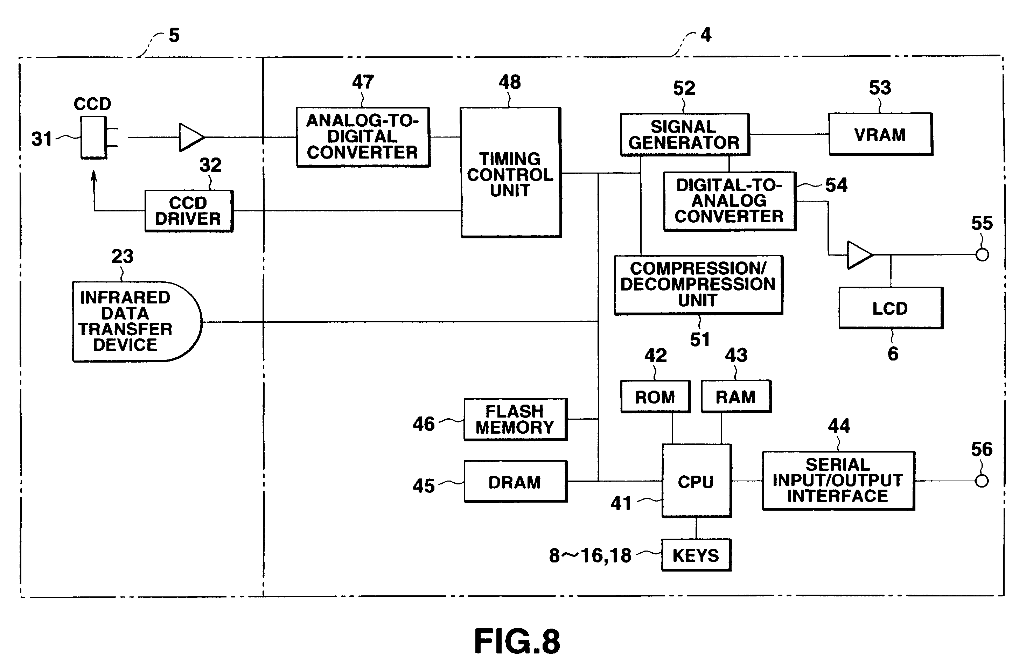

Figs. 1-7 shows the external appearance of a digital still camera 1 employing the present invention. The digital still camera 1 has a main body 2 and a movable body 3. The main body 2 has a case 4 which is shaped in a rectangular parallelepiped which includes a protrusive portion 20 appropriate to user's grip at its right end of the front surface. The main body 2 also has an LCD (liquid crystal display) 6 and a function changing switch 18, both of which are mounted on the back surface of the case 4. The LCD 6 may be used as a viewfinder for watching an object that is being photographed and as a monitor for watching pictures corresponding to the image data stored in a flash memory 46. As will be described later in detail, the image data is produced based on a picture which has been taken or is sent from a peripheral apparatus through a data communicating device, such as an infrared data communicating device 23 and a serial input/output interface 44. The function changing switch 18 may be used for designating a particular function in respective modes selected by a mode key 13 which will described later. Further, the main body 2 has a power switch 8 for turning the camera 1 on and off, a trigger switch 9 for taking a picture and storing image data corresponding to the picture into a flash memory 46 in a recording mode and for sending the image data stored in the flash memory 46 to the peripheral apparatus through the infrared data communicating device 23 or the serial input/output interface 44 in a data sending mode, a delete key 10 for deleting the image data stored in the flash memory 46, a picture select keys 11 and 12 for selecting the image data stored in the flash memory 46 in order to display a picture which a user desires on the LCD 6, a mode key 13 for selecting one of the recording mode, a reproducing mode, the data sending mode and a data receiving mode, a display key 14 for controlling the contrast of the LCD 6, a zoom key 15 for zooming in or out on the object to be taken and a selftimer key 16 for setting selftimer, all of which are mounted on the top surface of the case 4. A lift up cover 17 is pivotally fixed on the top surface of the case 4 and covers a video output terminal 55 (shown in Fig. 8) and a serial input/output terminal 56 (shown in Fig. 8) which are provided with the main body 2. The case 4 is formed with a hole 19 for fixing a tripod (not shown) on its bottom surface and a battery chamber (not shown) covered by a lid 21 which is detachably coupled to the bottom surface of the case 4.

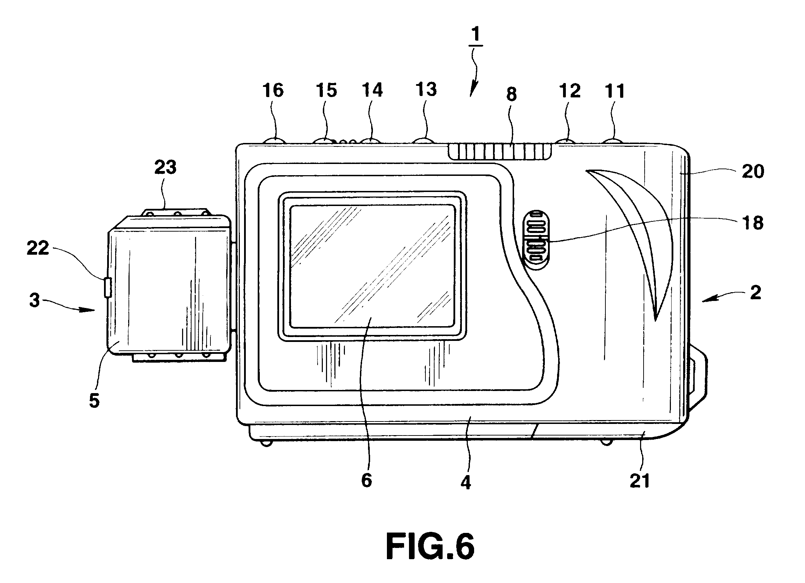

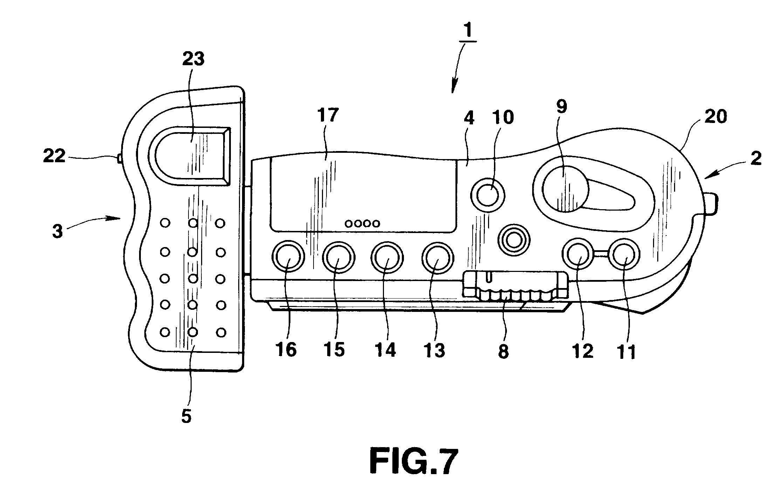

The movable body 3 rotatably couples to the main body 2 as shown Figs. 6 and 7. That is, the movable body 3 has a case 5 which is rotatably coupled to an axle (not shown) mounted on a left side surface of the case 4 of the main body 2. The axle may be made of a pipe which permits through its inner passage an electrical connection between electronic parts of the main body 2 and the movable body 3. The movable body 3 is thus able to rotate around the axle at least by 90° forwards and 180° backwards with respect to the main body 2. The case 5 has a lens system 7 mounted on its front surface. The lens system 7 is for focusing an optical image on a surface of a charge coupled device ("CCD") 31 which will be described later. The case 5 also has an infrared data communicating device 23 mounted on its rear surface. The infrared data communicating device 23 has a data transmitter (not shown) which sends the image data stored in the flash memory 46 to the peripheral apparatus and a data receiver (not shown) which receives image data from the peripheral apparatus. Further, the case 5 has a close-up mode key 22 for inserting a close-up lens (not shown) into the lens system 7 in order to take a close-up photograph.

Fig. 8 shows a block diagram of the digital still camera 1. The CCD 31 is contained in the case 5 of the movable body 3 and generates electric image signals based on the optical image focused on its surface through the lens system 7. The electric image signals generated by the CCD 31 are supplied to an analog-to-digital convertor 47 which is contained in the case 4 of the main body 2. The analog-to-digital convertor 47 converts the electric image signals into digital image signals and supplies them to a timing control unit 48. The timing control unit 48 converts the digital image signals supplied from the analog-to-digital convertor 47 into parallel digital image signals. The timing control unit 48 also supplies timing signals under the control of a central processing unit ("CPU") 41 to a CCD driver 32 contained in the case 5, which drives the CCD 31.

The CPU 41 controls all the processes of the digital still camera 1 in order to perform all of its function in response to information entered from the keys 8-16 and 18 and a program stored in a read only memory ("ROM") 42. A random access memory ("RAM") 43 is used as a work area by the CPU 41. A dynamic random access memory ("DRAM") 45 temporally stores the parallel digital image signals output from the timing control unit 48. The parallel digital image signals stored in the DRAM 45 are converted into digital image data which includes luminosity data and chroma data under the control of the CPU 41. The digital image data is supplied to a compression/decompression unit 51. The compression/decompression unit 51 compresses the digital image data and supplies the compressed image data to the flash memory 46. Further, the compression/decompression unit 51 decompresses the compressed image data supplied from the flash memory 46 and supplied the decompressed image data to a signal generator 52. The signal generator 52 produces digital video signals based on the digital image data supplied from the compression/decompression unit 51 or the CPU 41. The digital video signals are supplied to a video random access memory ("VRAM") 53 and a digital-to-analog convertor 54. The digital-to-analog convertor 54 converts the digital video signals into analog video signals. The analog video signals are supplied to a video output terminal 55 and the LCD 6.

The compressed image data stored in the flash memory 46 is supplied to a serial input/output interface 44 and the infrared data communicating device 23 via the CPU 41 as well as the compression/decompression unit 51 as mentioned above. The serial input/output interface 44 sends and receives serial data to and from the peripheral apparatus connected to a serial input/output terminal 56. The compressed image data supplied to the serial input/output interface 44 is converted into serial transfer data and is sent to the other apparatus through che serial input/output terminal 56. The serial transfer data received from the peripheral apparatus through the serial input/output interface 44 is converted into the parallel data and supplied to the CPU 41. When the serial transfer data received through the serial input/output interface 44 includes image data, the CPU 41 supplies the image data to the flash memory 46 for storing it. The infrared data communicating device 23 also sends and receives serial data to and from the peripheral apparatus by infrared optical pulses. The compressed image data supplied to the infrared data communicating device 23 is converted into serial transfer data. Thereafter, the infrared data communicating device 23 radiates infrared optical pulses corresponding to the serial transfer data. On the other hand, infrared optical pulses received from peripheral apparatus by the infrared data communicating device 23 are converted into parallel data and are supplied to the CPU 41. When the parallel data converted from the infrared optical pulses includes image data, the CPU 41 supplies the image data to the flash memory 46 for storing it.

The operation of the electronic still camera 1 will be described as follows.

When a user takes a picture, the user selects the recording mode by the mode key 13. In the recording mode, the LCD 6 performs a function of the viewfinder so that the user can watch an object to be taken through the LCD 6. That is, the LCD 6 displays the object focused on the CCD 31 by the lens system 7. When the user tries to find an object to be taken, the user may rotate the movable body 3 in order to turn the lens system 7 upward or downward without changing a view angle with respect to the LCD 6. Therefore, the user can always look at the LCD 6 from the best angle even when the lens system 7 is turned upward or downward. When the trigger switch 9 is depressed, the CPU 41 performs an operation for taking a picture. Under the control of the CPU 41, the electric image signals generated by the CCD 31 are supplied to the analog-to-digital convertor 47 and are converted into the digital image signals. The digital image signals are supplied to the timing control unit 48 and are converted into the parallel image signals. Thereafter, the parallel digital signals are temporarily stored in the DRAM 45. The CPU 41 processes the parallel image signals stored in the DRAM 45 in order to producing the digital image data including the luminosity data and the chroma data. The digital image data is supplied to the compression/decompression unit 51 and is compressed. The compressed digital image data is then stored in the flash memory 46.

When the user watches the picture which has been taken, the user selects the reproducing mode by the mode key 13. In the reproducing mode, the LCD 6 acts as a monitor for displaying a picture corresponding to the image data stored in the flash memory 46. The CPU 41 reads out the image data from the flash memory 46 and supplies it to the compression/decompression unit 51. The compression/decompression unit 51 decompresses the image data read out from the flash memory 46 and supplies the decompressed image data to the signal generator 52. The signal generator 52 converts the decompressed image data into the digital video signals and supplies them to the VRAM 53 and the digital-to-analog convertor 54. The digital-to-analog convertor 54 converts the digital video signals into the analog video signals and supplies them to the LCD 6. The LCD 6 displays the picture corresponding to the analog video signals. When the picture select keys 11 or 12 is depressed, the CPU 41 increases or decreases the address for reading out the image data stored in the flash memory 46 in order to read out other image data stored in the flash memory 46. The LCD 6 displays other pictures corresponding to the other image data read out from the flash memory 46 in the same manner set forth above. The user can thus search a desired picture to be displayed on the LCD 6 with the picture select keys 11 and 12.

When the user transfers the image data stored in the flash memory to a personal computer (not shown) or the like through the infrared data communicating device 23, the user selects the data sending mode by the mode key 13 and a function for sending image data through the infrared data communicating device 23 by the function changing switch 18. In the data sending mode, the LCD 6 also displays the picture corresponding to the image data stored in the flash memory 46 in the same manner as that in the reproducing mode set forth above. Further, the picture to be displayed on the LCD 6 can be selected by the picture select keys 11 and 12. Therefore, the user can search desired image data to be sent to the personal computer with the LCD 6. The LCD 6 also indicates the function selected by the function changing switch 18. The user may rotate the movable body 3 in order to face the infrared data communicating device 23 toward that of the personal computer. Therefore, the user can keep the electric still camera 1 within sight of the LCD 6 regardless of the position at which the personal computer is mounted with respect to the infrared data communicating device. When the trigger switch 9 is depressed, the CPU 41 reads out the image data corresponding to the picture displayed on the LCD 6 from the flash memory 46 and supplies them to the infrared data communicating device 23. The infrared data communicating device 23 radiates the infrared optical pulses according to the image data supplied from the CPU 41. In this embodiment, although the image data to be sent to the personal computer is the compressed data stored in the flash memory 46, it may be decompressed by the compression/decompression unit 51 based on the compressed image data stored in the flash memory 46. Since the main body 2 has the protrusive portion 20 for the user's grip and the keys 9, 11-13 and 18 which is necessary to operate the camera in the data sending mode, it is easy for the user to hold and operate the electronic still camera 1 with only one hand.

When the user downloads image data from a personal computer or the like to the electric still camera 1 through the infrared data communicating device 23, the user selects the data receiving mode by the mode key 13 and a function for receiving image data through the infrared data communicating device 23 by the function changing switch 18. The user may rotate the movable body 3 in order to face the infrared data communicating device 23 toward that of the personal computer. Thereafter, when the personal computer starts sending the image data through its infrared data communicating device, the infrared data communicating device 23 receives infrared optical pulses radiated from that of the personal computer and converts them into electrical signals representing the image data. The electrical signals, i.e. the image data, are supplies from the infrared data communicating device 23 to the CPU 41. The CPU 41 supplies the image data to the flash memory 46 for storing the image data. In the meantime, the LCD 6 may display data indicating conditions of the data communicating operation through the infrared data communicating devices between the electronic still camera 1 and the personal computer for the user. In this case, the user also can keep the electric still camera 1 within sight of the LCD 6 regardless of a position at which the personal computer is mounted with respect to the infrared data communicating device.

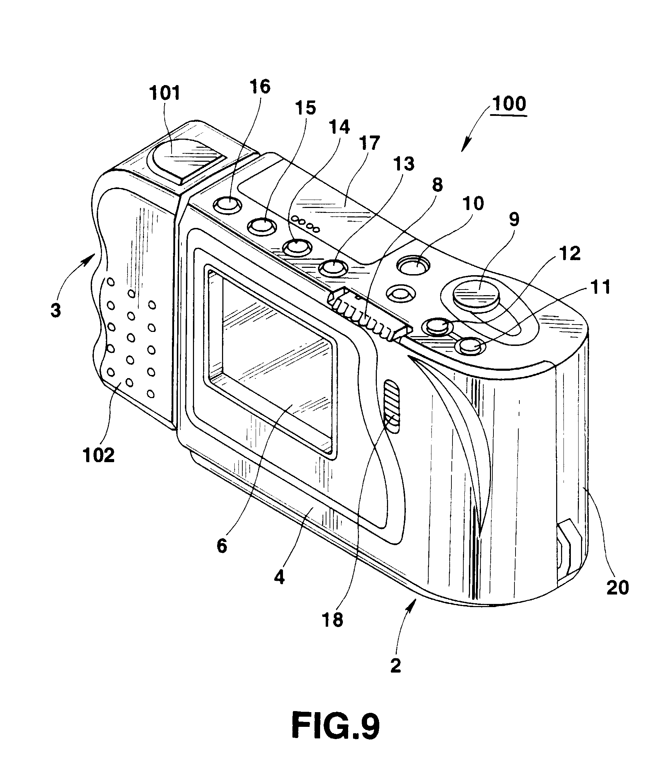

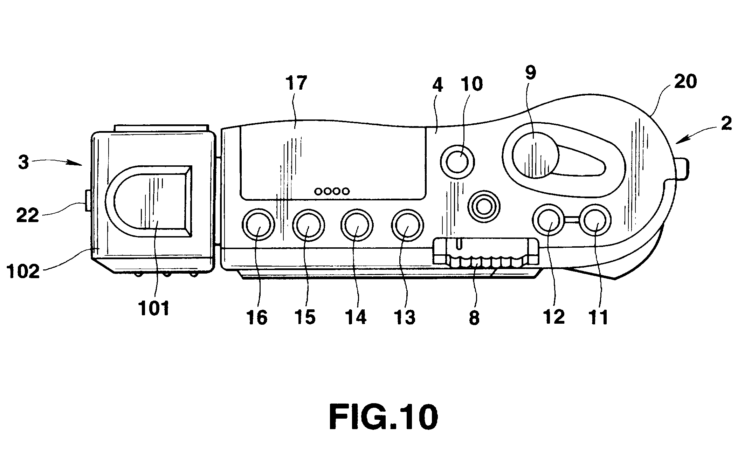

Figs. 9 and 10 shows an electronic still camera 100 as a second embodiment of the present invention. The electronic still camera 100 has an infrared data communicating device 101 which is mounted on a top surface of the case 102 of the movable body 3.

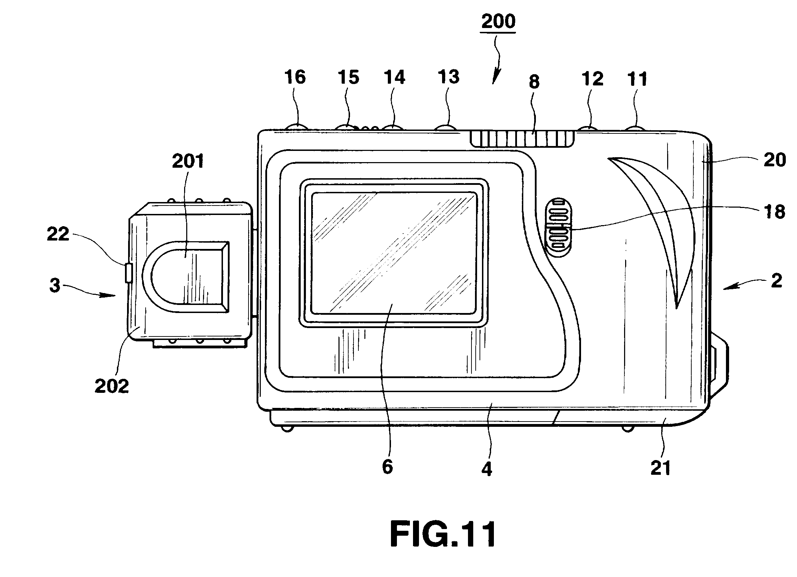

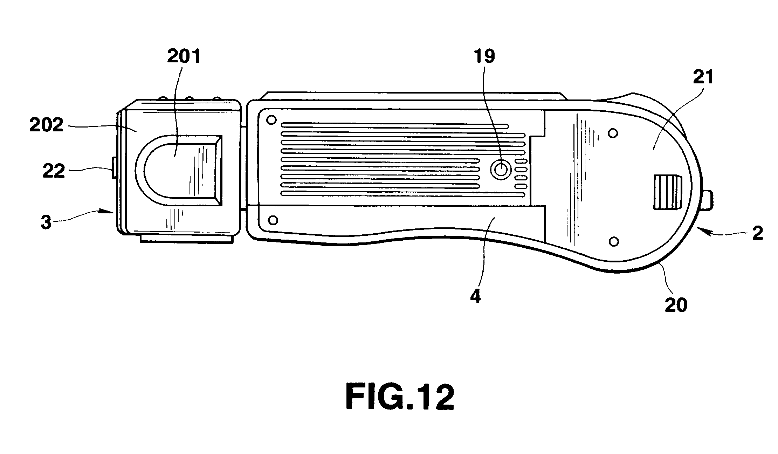

Figs. 11 and 12 shows an electronic still camera 200 as a third embodiment of the present invention. This camera 200 has an infrared data communicating device 201 which is mounted on a bottom surface of the case 202 of the movable body 3.

These electronic still cameras 100 and 200 are also able to provide the same effect as that of the electronic still camera 1 set forth above.

Although the embodiments set forth above illustrate the infrared data communicating device mounted on rear, top and bottom surface of the case of the movable body, the infrared data communicating device may be mounted on the front surface of the case of the movable body. Although the infrared data communicating device in the above illustrative embodiments is mounted to the case of the movable body which has the lens system, it may be mounted to other suitable cases which are movable with respect to the main body which has at least the LCD or other display devices for displaying the image data. Also, the present invention is not limited to infrared data communicating device as the wireless data communicating means; other suitable wireless data communicating technologies may be used.

## Claims

1. An electronic camera (1) for storing image data, said electronic camera comprising :
a main body (2);
a display device (6) contained in said main body for displaying a picture corresponding to image data;
a movable body (3) movably coupled to said main body; and
a wireless data communicating device (23, 44) contained in said movable body for communicating said image data.

2. An electronic camera (1) for storing image data according to claim 1, wherein said movable body (3) is rotatable with respect to said main body (2).

3. An electronic camera (1) for storing image data according to claim 1 or 2, further comprising an optical system (7) contained in said movable body (3) for focusing on an object to be photographed.

4. An electronic camera (1) for storing image data according to any one of claims 1 to 3, further comprising a key unit (10-16, 22) contained in said main body (2) for manual operation of said camera.

5. An electronic camera (1) for storing image data according to claim 4, further comprising a grip portion (20) formed on said main body (2) for holding said electronic camera.

6. An electronic camera (1) for storing image data according to any one of claims 1 to 5, wherein said wireless data communicating device includes an infrared data communicating device (23).

7. An electronic camera (1) for storing image data according to any one of claims 1 to 6, wherein said wireless data communicating device includes a wireless data transmitter (23) for sending image data.

8. An electronic camera (1) for storing image data according to any one of claims 1 to 7, wherein said wireless data communicating device includes a wireless data receiver (23) for receiving image data.
